# EUROPEAN PATENT SPECIFICATION

(11) **EP 0 455 987 B1**
(45) Date of publication and mention of the grant of the patent: **05.03.1997**
(21) Application number: 91105348.6
(22) Date of filing: 04.04.1991
(51) Int. Cl.: H04M 1/00, H04N 1/32, H04M 1/72

(54) **Communicating apparatus having dual function of a facsimile and a cordless telephone**
Kommunikationsapparat mit Zweifachfunktion als Faksimile und als schnurloses Telefon
Appareil de communication ayant une fonction double de facsimilé et de téléphone sans fil

(30) Priority: 06.04.1990 JP 92590/90
(43) Date of publication of application: 13.11.1991
(73) Proprietor: SHARP KABUSHIKI KAISHA, Osaka 545 (JP)
(72) Inventor: Morigami, Masanori, Nara-shi, Nara-ken (JP)
(74) Representative: TER MEER - MÜLLER - STEINMEISTER & PARTNER

(56) References cited:
- EP-A- 0 310 433
- PATENT ABSTRACTS OF JAPAN vol. 8, no. 243 (E-277)8 November 1984 & JP-A-59 122 175
- PATENT ABSTRACTS OF JAPAN vol. 9, no. 277 (E-355)(2000) 6 November 1985 & JP-A-60 119 142
- PATENT ABSTRACTS OF JAPAN vol. 11, no. 92 (E-491)24 March 1987 & JP-A-61 242 157
- PATENT ABSTRACTS OF JAPAN vol. 8, no. 44 (E-229)25 February 1983 & JP-A-58 200 659
- PATENT ABSTRACTS OF JAPAN vol. 13, no. 413 (E-820)12 September 1989 & JP-A-11 51 869
- PATENT ABSTRACTS OF JAPAN vol. 14, no. 411 (E-973)5 September 1990 & JP-A-21 54 565
- PATENT ABSTRACTS OF JAPAN vol. 16, no. 004 (E-1151)8 January 1992 & JP-A-32 27 148
- PATENT ABSTRACTS OF JAPAN vol. 16, no. 120 (E-1182)26 March 1992 & JP-A-32 89 262

## Description

### BACKGROUND OF THE INVENTION

### 1.Field of the Invention

The present invention relates to a communicating apparatus including a main unit, which has various communicating functions, and a portable remote unit. More specifically, the present invention relates to a communicating apparatus quite suitable for a combinational communicating apparatus having dual functions of a facsimile and a cordless telephone.

### 2.Description of the Related Arts

A cordless telephone includes at least one remote cordless handset and a base unit - see for example EP-A-0 310 433. The cordless telephone is convenient since users can establish a voice communication on the telephone line by use of the cordless handset at any place in a prescribed area remote from the base unit.

The cordless handset includes a transmitter and a receiver so as to communicate with the base unit in a cordless manner, and may be equipped with dial keys for dialing operation besides a speaker and a microphone.

The base unit includes a telephone line communication system which is normally connected with a local telephone line directly. Alternatively, the base unit may employ a wireless communication system to communicate with the telephone line network. As a characteristic feature of the cordless telephone, the base unit also includes a transmitter and a receiver so as to communicate with the cordless handset in a cordless manner. Accordingly, the voice communication can be established on the telephone line network by use of the cordless handset via the base unit. There may be equipped another handset connected to the main unit by a cord just in a same manner as a conventional telephone. The base unit may be adapted such that the voice communication between this handset connected to the base unit and the cordless handset is enabled.

On the other hand, a facsimile also utilizes the telephone line network. The facsimile is adapted to transmit and receive the facsimile data through the telephone line. Since the number of the local telephone lines are limited and each of the telephone lines are normally tollable, a communicating apparatus in a combination form is developed which includes a facsimile and a telephone as one unit. In this combinational communicating apparatus, the telephone line is selectively used by either the facsimile or the telephone by use of a selection controlling system employed therein, so as to selectively establish a facsimile communication by the facsimile or a voice communication by the telephone.

As the above-mentioned cordless telephone and the facsimile become popular, a communicating apparatus in a combination form is developed which includes a facsimile and a cordless telephone.

One type of such a combinational communicating apparatus, includes a main unit and a cordless handset of the cordless telephone. The main unit includes the facsimile and the base unit of the cordless telephone. This communicating apparatus further includes a control device in the main unit which select either the facsimile or the cordless telephone as an operating device, by connecting the local telephone line to either of them. Thus, either the voice communication by use of the cordless telephone or the facsimile communication by use of the facsimile can be established by this communicating apparatus with the single local telephone line.

In this type of the communicating apparatus in the combination form, the voice communication by use of the cordless telephone can be established as following. Namely, at first, the voice communication button provided on the cordless handset, is pushed by the user. Then, the dial tone indicating that the communicating apparatus is available for the voice communication (i.e. the facsimile communication is not established at this moment), is checked by the user by hearing it on the cordless handset. After the user confirms the existence of the dial tone, the user inputs the telephone number of the opponent party to which the voice communication is to be established, by operating the dial keys.

On the other hand, the base unit has various kinds of functions as the facsimile and is provided with a plurality of corresponding function keys. In these function keys, there is a voice communication request key. If this request key is operated during the facsimile communication so that a voice communication to the same opponent party is desired, the main unit of the communicating apparatus does not shut-off the established communication on the telephone line when the facsimile operation is completed, but performs a calling operation to the opponent party. When the other party corresponds to this calling operation, the base unit informs the user by a calling alarm, for example. Then, the handset is again taken up by the user and the telephone communication is enabled with the opponent party.

In the above-mentioned combinational communicating apparatus of the facsimile and the cordless telephone, the user can be aware that the facsimile communication is established i.e. the voice communication is not available when he desires a voice communication, only by hearing the outputted sound from the speaker of the cordless handset and by checking the non-existence of the dial tone after picking up the cordless handset, setting the cordless handset in its operating condition, and putting his ear on the speaker of the cordless handset. In this way, the telephone operation by this cordless handset is rather inconvenient, time-consuming and troublesome operation.

Further in the above-mentioned combinational communicating apparatus, since the main unit is provided with the operation keys for the facsimile communication, while the cordless handset is provided with the dial keys etc. for the voice communication, the control of the facsimile communication can be executed only at the site of the main unit, resulting in inconvenience of facsimile operation. For example, even if the telephone number as the destination of a facsimile transmission is inputted and the communication of the telephone line is established thereto by use of the cordless handset in a same manner as to establish the voice communication, the user still should go to operate the start key provided on the main unit so as to start the facsimile transmission. Furthermore, in case of the aforementioned request for the voice communication during the facsimile communication, the user should also go to operate the key for requesting the voice communication provided on the main unit.

By the way, there is, what is called, a "one piece phone", type telephone as one kind of telephone. This one piece phone has a handset which is connected with the base unit by a cord and provided with the dial keys etc. for the voice communication. If this type of telephone is utilized in the above-mentioned combinational communicating apparatus, the above-mentioned facsimile operation or voice communication requesting operation is also inconvenient since the start key or the key for requesting the voice communication provided on the main unit, should be operated at the site of the main unit by one of the user,s hands while holding the handset by the other of his hands in order to enable the communication on the telephone line.

### SUMMARY OF THE INVENTION

It is therefore a first object of the present invention to provide a communicating apparatus, which includes a main unit having various communicating functions and a remote unit, in which the operating condition of the main unit can be monitored at the site of the remote unit.

It is a second object of the present invention to provide a communicating apparatus, which includes a main unit having various communicating functions and a portable remote unit, in which the operation of the main unit can be controlled by the remote unit.

According to the present invention, the above-mentioned objects can be achieved by a communicating apparatus according to the features of the independent claim 1. Preferred embodiments are listed in the dependent claims.

Further objects and advantages of the present invention will be apparent from the following description of the preferred embodiment of the invention as illustrated in the accompanying drawings.

### BRIEF DESCRIPTION OF THE DRAWINGS

Fig.1 is a block diagram of a main unit of a communicating apparatus as an embodiment of the present invention;
Fig.2 is a block diagram of a remote cordless handset unit of the communicating apparatus in combination with the main unit of Fig.1;
Fig.3 is a front elevation view of the remote cordless handset unit of Fig.2;
Fig.4 is a flowchart showing one operation of the communicating apparatus of Figs.1 and 2;
Fig.5 is a flowchart showing another operation of the communicating apparatus of Figs. 1 and 2; and
Fig.6 is a flowchart showing another operation of the communicating apparatus of Figs.1 and 2.

### DETAILED DESCRIPTION OF THE PREFERRED EMBODIMENT

A preferred embodiment of the present invention will be described below with reference to the accompanying drawings.

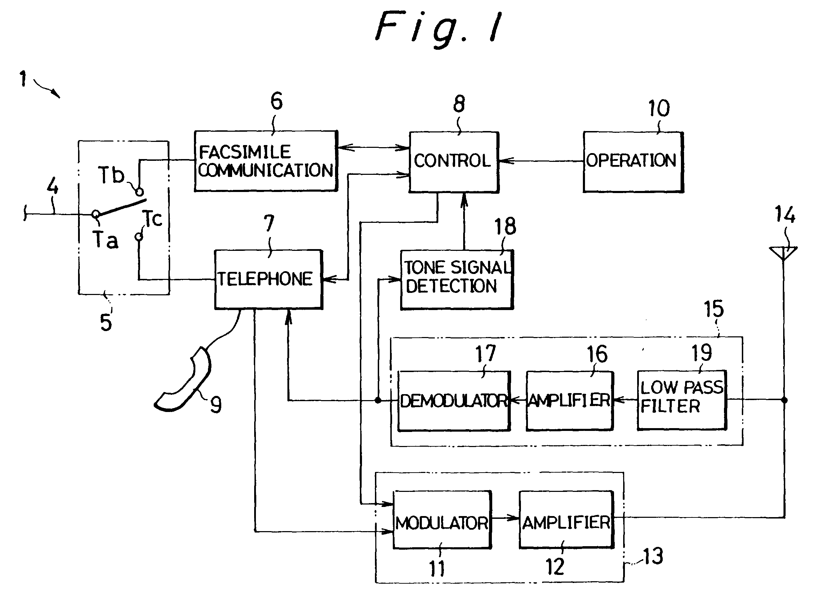

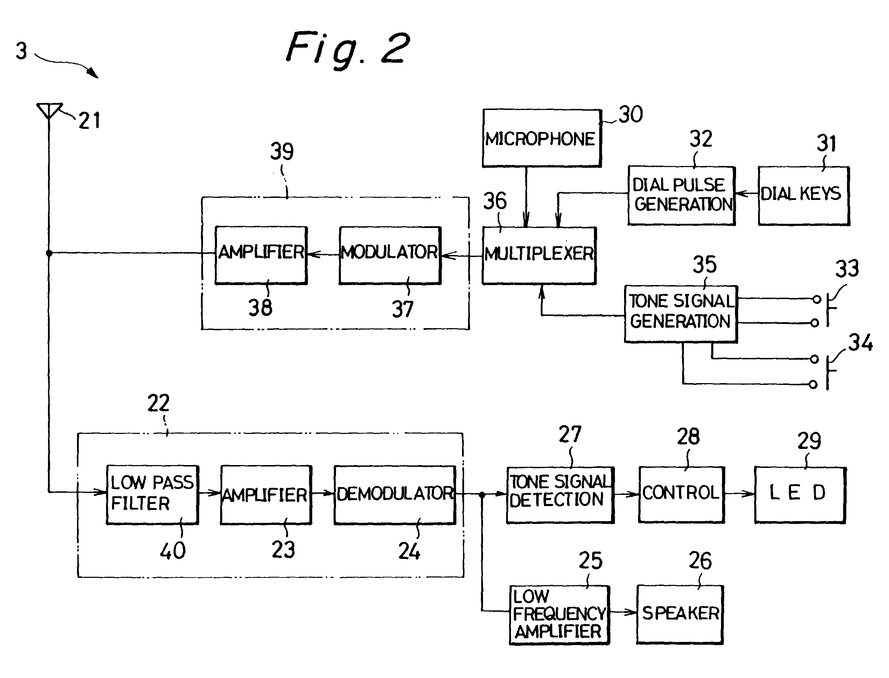

A communicating apparatus as an embodiment of the present invention consists of a main unit shown in Fig.1 and a remote cordless handset unit shown in Fig.2.

In Fig.1, a main unit 1 of the communicating apparatus is connected with a telephone line 4. The main unit 1 has functions of a facsimile and a base unit of a cordless telephone.

In Fig.2, a remote cordless handset unit 3 of the communicating apparatus communicates with the main unit 1 of Fig.1 in a two-way and cordless manner as described later.

The construction of the main unit 1 is explained hereinbelow, with referring to Fig.1.

In Fig.1, the main unit 1 is provided with a CML (Connect to Mode Line) relay 5. The CML relay 5 contains terminals Ta, Tb and Tc. The Ta is connected with the telephone line 4. The CML relay 5 is adapted to selectively connect the terminal Ta with either the terminal Tb or Tc.

The main unit 1 is also provided with a facsimile communication unit 6, a telephone unit 7 and a control unit 8. The facsimile communication unit 6 is connected with the terminal Tb. The telephone unit 7 is connected with the terminal Tc. The control unit 8 is constructed of a CPU (Central Processor Unit), for example. The switching operation of the CML relay 5 is performed by control signals given by the control unit 8 depending on a requested communication i.e. either a facsimile communication or a voice communication requested by the user.

The control unit 8 is connected with an operation unit 10. The operation unit 10 includes ten keys to input a numerical information such as a telephone or facsimile number, a start key to start a facsimile transmission etc., a voice communication request key and so on as described later. The control unit 8 controls the facsimile communication unit 6 and the telephone unit 7 based on the outputs of the operation unit 10.

The facsimile communication unit 6 is equipped with a reading means, which reads an image of an original to be transmitted as facsimile data onto the telephone line 4, and a recording means, which records an image data received through the telephone line 4 onto a recording paper. The facsimile communication unit 6 can perform such a facsimile communication only when the CML relay 5 is switched to the terminal Tb under the control of the control unit 8.

The telephone unit 7 is equipped with a handset 9 which is connected to the main unit 1 by a cord. This handset 9 allows the user to make a voice communication at the site of the main unit 1 just in a same manner as in the case of the conventional telephone. The telephone unit 7 can perform such a voice communication on the telephone line 4 only when the CML relay 5 is switched to the terminal Tc. This handset 9 may be omitted since such a voice communication can be also preformed by use of the cordless handset unit 3 as described later. The telephone portion 7 etc. may be constructed such that a voice communication between the handset 9 and the cordless handset unit 3 is enabled.

The main unit 1 is also provided with a transmitter circuits 13 and a receiver circuit 15, which establishes the cordless transmission and reception of the voice signal and various data signals between the main unit 1 and the cordless handset unit 3.

The transmitter circuit 13 includes a modulator 11 and a amplifier 12. The modulator 11 modulates the voice signal from the telephone unit 7 and the control signal i.e. the tone signal from the control unit 8. Then, the amplifier 12 amplifies the modulated voice signal and the modulated control signal, which are transmitted to the air from an antenna 14. The antenna 14 is adapted to transmit and receive electromagnetic wave signal within a predetermined frequency range. The signal received by the antenna 14 is given to the receiver circuit 15.

The receiver circuit 15 includes a low pass filter 19, an amplifier 16 and a demodulator 17. The voice signal and the tone signal transmitted from the cordless handset unit 3 and received by the antenna 14, is filtered by the low pass filter 19, amplified by the amplifier 16 and then demodulated by the demodulator 17. The output of the demodulator 17 is given to the telephone unit 7 and the tone signal detection circuit 18, respectively. The tone signal detection circuit 18 detects the tone signal component in the received signal, and outputs the detected tone signal to the control unit 8.

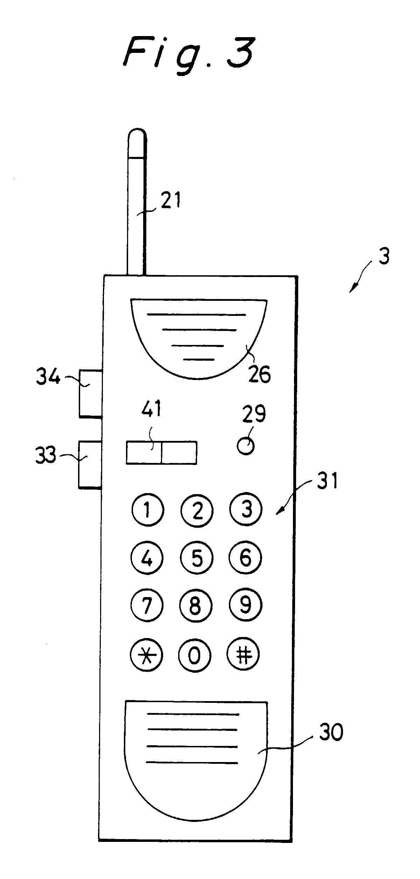

The construction of the cordless handset unit 3 will be described hereinbelow with referring to Figs.2 and 3.

In Fig.2, the cordless handset unit 3 is provided with an antenna 21 and a receiver circuit 22. The voice signal and the control signal transmitted from the main unit 1 is received by the antenna 21 and is given to the receiver circuit 22. The receiver circuit 22 includes a low pass filter 40, an amplifier 23 and a demodulator 24. The received signals are filtered by the low pass filter 40, amplified by the amplified by the amplifier 23, and then demodulated by the demodulator 24.

The cordless handset unit 3 is also provided with a low frequency amplifier 25, a speaker 26, a tone signal detection circuit 27, a control unit 28 and a LED 29 as one example of a monitor device.

The output of the demodulator 24 is given to the low frequency amplifier circuit 25 and the tone signal detection circuit 27, respectively. The low frequency amplifier circuit 25 amplifies the voice signal component in the received signal and gives the amplified voice signal to the speaker 26. Then, the speaker 26 generates sound according to the given voice signal.

The tone signal detection circuit 27 detects the tone signal component in the received signal, and outputs the detected tone signal to the control unit 28. The control unit 28 consists of a CPU, for example. The control unit 28 drives the LED 29. The LED 29 is adapted to be driven to flicker in various manner according to the received tone signal, so that the user at the site of the cordless handset unit 3 can be aware of the flickering of the LED 29. The monitor device may be constructed by a device other than the LED 29, such as a sound generator which generates sound in various manners, a liquid crystal display device which exhibits display in various manners and so on.

In Fig.3, the cordless handset unit 3 is provided with various kinds of keys, i.e. dial keys 31, a start/stop key 33, a voice communication request key 34, a voice communication button 41 for controlling the facsimile operation and the cordless telephone operation. The cordless handset unit 3 is also provided with the speaker 26, and a microphone 26 so as to enable the voice communication. The LED 29 and the antenna 21 are also shown in Fig.3.

In Fig.2, the cordless handset unit 3 is also provided with a dial pulse generation circuit 32, a tone signal generation circuit 35 and a multiplexer 36.

The voice signal from the microphone 30 is given to the multiplexer 36. The dial keys 31 are connected to the dial pulse generation circuit 32, which generates dial pluses corresponding to the operated key, and outputs the dial pulses to the multiplexer 36. The start/stop key 33 and the voice communication request key 34 are connected to the tone signal generation circuit 35, respectively. The tone signal generation circuit 35 generates tone signals which frequency varies depending on the operated key, i.e. whether the start/stop key 33 or the voice communication request key 34 is operated, and outputs the tone signals to the multiplexer 36.

The cordless handset unit 3 is further provided with a transmitter circuit 39. The transmitter circuit 39 includes a modulator 37 and an amplifier 38. The outputted signal from the multiplexer 36 is modulated by the modulator 37, then amplified by the amplifier 38, and finally transmitted from the antenna 21 to the air.

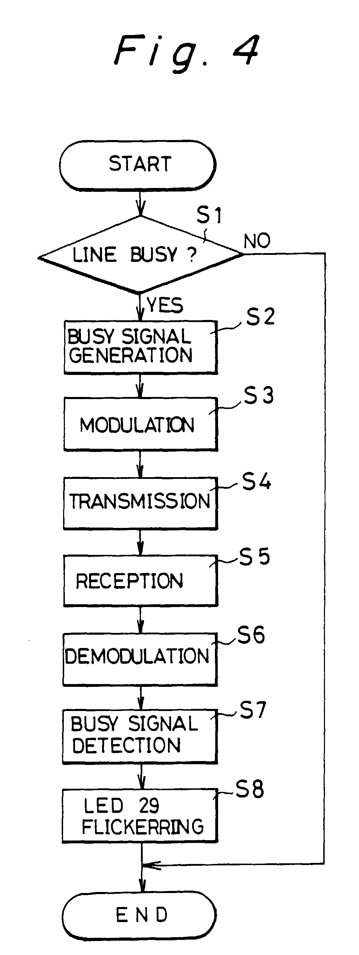

The operation of the communicating apparatus consisting of the above described main unit 1 and the cordless handset unit 3 will be explained hereinbelow with referring to Figs.4 to 6.

Fig.4 shows a flow chart of one operation of the main unit 1 and the cordless handset unit 3, in which the condition of the main unit 1 is informed to the user at the site of the cordless handset unit 3.

In Fig.4, at the step S1, it is judged by the control unit 8 whether the telephone line 4 is busy or not, i.e. used by the facsimile communication unit 6 or the telephone apparatus 7 with the handset 9 of the main unit 1 or not. If the telephone line 4 is judged to be busy, the flow branches to the step S2 (Yes). Then, a busy signal f1, such as a tone signal with a frequency of 2,400 Hz for example, is generated by the control unit 8 (step S2), and the generated busy signal f1 is modulated by the modulator 11 (step S3). Then, the modulated signal is amplified by the amplifier 12 and transmitted toward the cordless handset unit 3 from the antenna 14 (step S4).

Then, the cordless handset unit 3 receives the signal transmitted from the main unit 3 by the antenna 21 (step S5), and the received signal is filtered, amplified and demodulated in the receiver circuit 22 (step S6). The busy signal f1 is detected by the tone signal detection circuit 27 (step S7). Then, the LED 29 is driven to flicker in a prescribed manner by the control unit 28 according to the detected busy signal f1 (step S8). Accordingly, the user at the site of the cordless handset unit 3 can be informed that the facsimile or voice communication is in progress at the main unit 1, and that the voice communication by use of the cordless handset unit 3 is not available.

If the telephone line 4 is not busy at the step S1, the flow is branched to the END, and thus the LED 29 does not flicker, so that the user at the site of the cordless handset unit 3 realizes that the voice communication by use of the cordless handset 3 is available at this moment.

In case that a voice outputting device is utilized as the monitor device instead of the LED 29, a voice message such as "The line is now busy." may be preferably generated. In case that a sound generator is utilized as the monitor device, a predetermined alarming sound may be generated to indicate that the line is busy. Alternatively, in case that a liquid crystal display device is utilized as the monitor device, a display message such as "line busy" may be preferably exhibited on the display panel.

As described above, when the facsimile or voice communication is in progress at the main unit 1, the LED 29 of the cordless handset unit 3 flickers. Consequently, the user who is situated remote from the main unit 1, can realize this condition of the main unit 2 just by watching the cordless handset unit 3. This is very convenient compared with the case of the aforementioned related art apparatuses, in which it is necessary for the user at the site of the cordless handset to pick up the cordless handset, push the voice communication button, and then hear and check the dial tone in order to know the condition of the main unit.

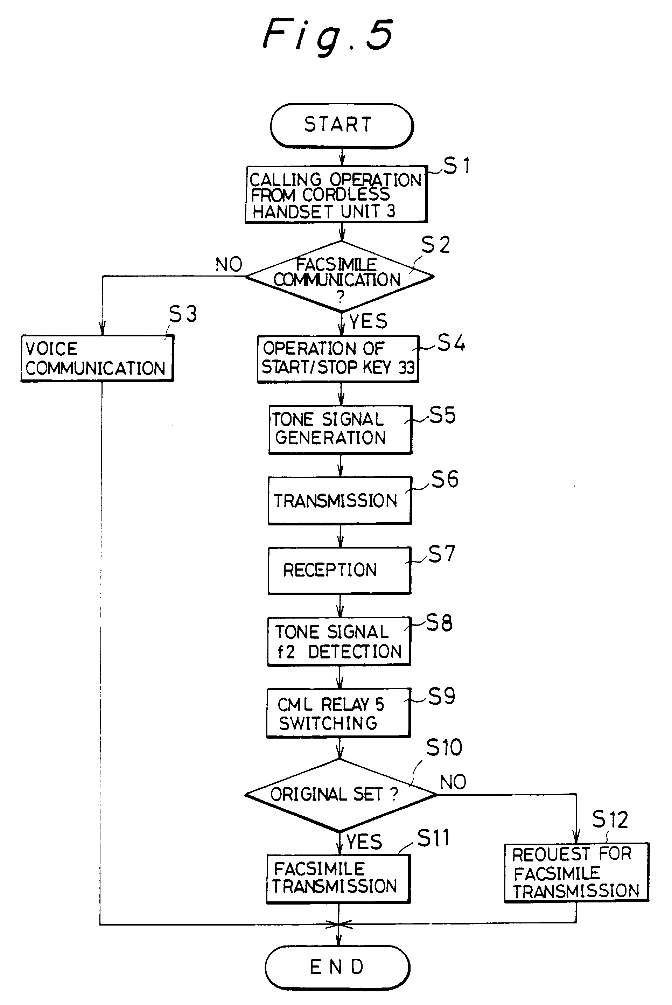

Fig.5 shows a flow chart of another operation of the main unit 1 and the cordless handset unit 3, in which the facsimile communication is controlled by the user at the cordless handset unit 3, or the voice communication by use of the cordless handset unit 3 is established.

In Fig.5, at the step S1, a calling operation is performed by the user by use of the side of the cordless handset unit 3, i.e. the dial number of the opponent party is inputted by use of the dial keys 31. Then, it is judged whether the opponent party is a facsimile device or a telephone device by the control unit 8 by checking the existence of the CNG (Computerized Numerical Control) signal transmitted from the opponent party (step S2).

If it is not judged as a facsimile device (No), the flow branches to the step S3, and the voice communication is established between the cordless handset unit 3 and the opponent party. If it is judged as a facsimile device (Yes), the flow branches to the step S4.

In the step S4, the start/stop key 33 is operated by the user. Then, the tone signal f2 with a frequency of 2,500 Hz for example, is generated by the tone signal generation circuit 35 (step S5). The generated tone signal f2 is transmitted by the transmitter circuit 39 and antenna 21 to the main unit 1 (step S6).

The transmitted tone signal f2 is received by the main unit 1 by use of the antenna 14 and the receiver circuit 15 (step S7). Then, the tone signal f2 is detected by the tone signal detection circuit 18 (step S8). The control unit 8 switches the CML relay 5 as responding to the detected tone signal f2. Namely, the terminal Ta and the terminal Tb are connected with each other so as to establish the facsimile communication (step S9).

At the step S10, it is judged by the control unit 8 whether an original is set on the facsimile communication unit 6 or not. If the original is set (Yes), the flow branches to the step S11, and the facsimile transmitting operation is performed from the main unit 1 to the opponent party. If the original is not set (No), the flow branches to the step S12. In the step 12, the main unit 1 requests the opponent party to transmit a facsimile data, and then the facsimile receiving operation is performed from the opponent party to the main unit 1.

Accordingly, since the cordless handset unit 3 is adapted to control the facsimile communication unit 6 in a cordless manner by use of the start/stop key 33 etc., the start of the facsimile transmitting and receiving operations can be executed under the control from the cordless handset unit 3.

For example, in case that the user shuts off once the telephone line after the user sets the original to the facsimile communication unit 6, tries to perform a facsimile transmission from the main unit 1 to the opponent party, and then finds the opponent party's line being busy, the user can start the desired facsimile transmission at a place remote from the main unit 1 by use of the cordless handset unit 3. In case that the user makes a request for facsimile transmission (polling), the user can make the request by inputting the dial number and pushing the start/stop key 33 from a place remote from the main unit 1 as long as the user carries the cordless handset unit 3.

As described above, the very convenient facsimile operation is realized by the present embodiment.

The one piece phone may be employed in the present embodiment, which is connected to the telephone unit 7 and is provided with a start/stop key for the facsimile communication. In this case, after the user sets the original to the facsimile communication unit 6, the user can speedily start the transmission by operating the start/stop key by one hand, as the facsimile transmitting operation can be controlled only by the handset connected by a cord to the main unit 1.

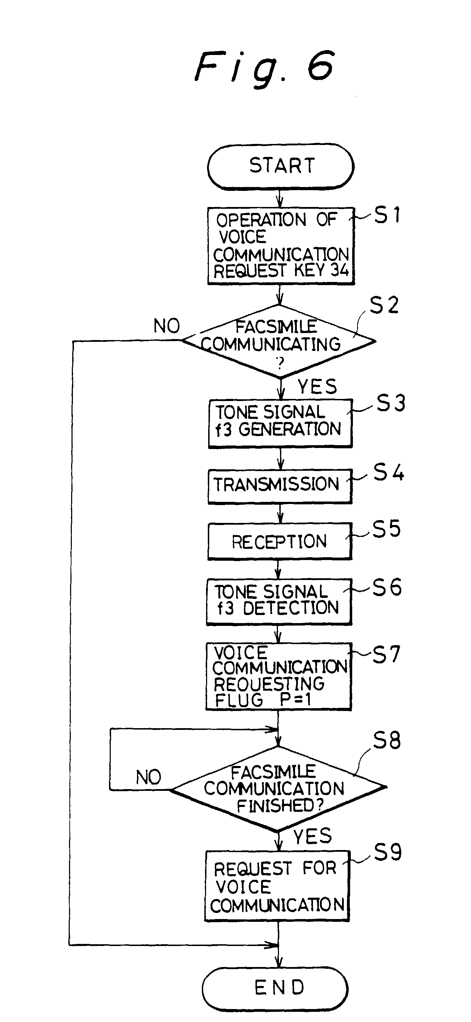

Fig.6 shows a flow chart of another operation of the main unit 2 and the cordless handset unit 3, which includes the operation of the request for voice communication.

In Fig.6, at the step S1, the voice communication request key 34 is pushed by the user at the side of the cordless handset unit 3. Then, at the step S2, if the facsimile communication is not in progress in the main unit 1 (No), the flow branches to the END and the voice communication is enabled immediately by use of the cordless handset unit 3.

If the facsimile communication is in progress in the main unit 1 (Yes), the flow branches to the step S3 and the tone signal f3 with a frequency of 2,600 Hz for example, is generated by the tone signal generation circuit 35. Then, the tone signal f3 is transmitted from the cordless handset unit 3 to the main unit 1 (step S4), and received by the main unit 1 (step S5).

Then, the tone signal f3 is detected by the tone signal detection circuit 18 (step S6) and a voice communication requesting flag P is set to 1 in the control unit 8 (step S7). Then, it is continued (No) to judge whether the facsimile communication is finished or not by the control unit 8 until it is finished (step S8).

When the facsimile communication is finished (Yes), the voice communication is requested, by the control unit 8 and the telephone unit 7, to the opponent party without shutting off the telephone line 4 (step S9).

As described above, according to the present embodiment, a quite convenient and useful function of the request for the voice communication, can be realized. Namely, when the voice communication request key 34 is pushed during the facsimile communication, and the voice communication with the same opponent party is desired by the user, the main unit 1 does not shut off the established communication on the telephone line 4 with the opponent party, but performs a calling operation to the opponent party when the facsimile communication is completed. Then, when the opponent party responds to this calling operation, the main unit 1 informs the user that the opponent party is ready for the voice communication by an alarm sound or the LED 29. Then, the voice communication request key 34 is again pushed by the user, so that the voice communication with the opponent party can be finally established.

As described above, since the voice communication request key 34 is provided on the cordless handset 34, a great convenience for the user can be realized that it is not necessary for the user to go to the site of the main unit 1 in case that the user desires the voice communication after the facsimile communication.

## Claims

1. A communicating apparatus comprising:
a main unit (1), which has a plurality of communicating functions, including means (5, 8, 10) for setting selectively one of a plurality of communicating modes, including telephone communication mode and facsimile communication mode, in said main unit to enable one of said communicating functions, means (13) for generating an operation monitor signal which varies according to said set communicating mode, and means (14) for transmitting said generated operation monitor signal; and
a remote unit (3), which is adapted to transmit a data signal to said main unit (1) and receive a data signal from said main unit, including means (22-27) for receiving and detecting said transmitted operation monitor signal, and a monitor means (29) which is driven in various manners depending on the variation of said detected operation monitor signal so as to monitor said communicating mode set in said main unit,
characterized in that said remote unit (3) further comprises an operation start/stop key (33) to be pressed for transmitting a data signal to said main unit so that said setting means (5, 8, 10) selects a facsimile mode when an opponent party is a facsimile device, and a speech request key (34) to be pressed while in facsimile communication mode for transmitting a data signal to said main unit so that said setting means (5, 8, 10) in said main unit makes a speech request to the opponent party without disconnecting a telephone line (4), after facsimile communication has been completed.

2. A communicating apparatus according to Claim 1, wherein said main unit (1) includes a facsimile communication unit (6) and a cordless telephone base unit (7), while said remote unit comprises a cordless telephone handset unit (3).

3. A communicating apparatus according to Claim 2, wherein said setting means comprises a relay (5) for selectively connecting a telephone line (4) to either said facsimile communication unit (6) or said cordless telephone base unit (7).

4. A communicating apparatus according to Claim 1, wherein said monitor means (29) comprises a LED for flickering according to said detected operation monitor signal.

## Patentansprüche

1. Kommunikationsgerät mit
einer eine Vielzahl von Kommunikationsfunktionen aufweisenden Haupteinheit (1) umfassend eine Einrichtung (5, 8, 10) zur selektiven Einstellung von einer aus mehreren den Telefon- oder Faksimile - Kommunikationsmodus einschließenden Kommunikationsarten in dieser Haupteinheit, um eine der Kommunikationsarten zu ermöglichen, eine Einrichtung (13) zur Erzeugung eines sich je nach eingestellter Kommunikationsart verändernden Funktions-Überwachungssignals sowie eine Einrichtung (14) zur Übertragung dieses Funktions - Überwachungssignals; und
einer auf die Übertragung eines Datensignals an die Haupteinheit (1) und den Empfang eines Datensignals von der Haupteinheit angepaßten Ferneinheit (3) mit Einrichtungen (22 - 27) zum Empfang und zur Ermittlung dieses Funktions - Überwachungssignals sowie einer Überwachungseinrichtung (29), die je nach Art des ermittelten Funktions - Überwachungssignals auf unterschiedliche Weise angetrieben wird, um den in der Haupteinheit eingestellten Kommunikationsmodus zu überwachen,
**dadurch gekennzeichnet, daß** die Ferneinheit (3) weiterhin umfaßt: eine Funktions - Start / Stop - Taste (33), die zur Übertragung eines Datensignals an die Haupteinheit zu betätigen ist, damit die Einstelleinrichtung (5, 8, 10) einen Faksimilemodus auswählt, wenn die Gegenstelle ein Faksimilegerät ist sowie eine Sprech - Anforderungstaste (34), die während des Faksimilemodus zur Übertragung eines Datensignals an die Haupteinheit zu betätigen ist, damit die Einstelleinrichtung (5, 8, 10) in der Haupteinheit ohne Unterbrechung der Telefonleitung (4) eine Sprechanforderung an die Gegenstelle stellt, nachdem die Faksimilekommunikation abgeschlossen ist.

2. Kommuniaktionsgerät gemäß Anspruch 1, worin die Haupteinheit (1) eine Faksimile - Kommunikationseinheit (6) sowie eine schnurlose Telefon - Basiseinheit (7) und die Ferneinheit einen schnurlosen Telefon - Handapparat (3) umfaßt.

3. Kommunikationsgerät gemäß Anspruch 2, worin die Einstelleinrichtung ein Relais zur selektiven Verbindung einer Telefonleitung (4) mit der Faksimile - Kommunikationseinheit (6) oder der schnurlosen Telefon - Basiseinheit (7) umfaßt.

4. Kommunikationsgerät gemäß Anspruch 1, worin die Überwachungseinrichtung (29) eine LED umfaßt, die entsprechend dem ermittelten Funktions - Überwachungssignal aufflakkert.

## Revendications

1. Appareil de communication comprenant:
une unité principale (1), qui comporte une multiplicité de fonctions de communication, comprenant des moyens (5, 8, 10) pour établir de façon sélective un mode parmi une multiplicité de modes de communication, qui comprennent un mode de communication téléphonique et un mode de communication par télécopie, dans ladite unité principale afin d'autoriser l'une desdites fonctions de communication, des moyens (13) pour générer un signal de contrôle de fonctionnement qui varie en fonction dudit mode de communication établi, et des moyens (14) pour émettre ledit signal de contrôle de fonctionnement généré; et
une unité éloignée (3), qui est adaptée pour envoyer un signal de données à ladite unité principale (1) et recevoir un signal de données en provenance de ladite unité principale, comprenant des moyens (22 à 27) pour recevoir et détecter ledit signal de contrôle de fonctionnement émis, et des moyens de contrôle (29) qui sont actionnés de diverses manières en fonction de la variation dudit signal de contrôle de fonctionnement détecté de façon à contrôler ledit mode de communication établi dans ladite unité principale,
caractérisé en ce que ladite unité éloignée (3) comprend, en outre, une touche début/arrêt de fonctionnement (33) devant être enfoncée pour transmettre un signal de données à ladite unité principale de façon à ce que lesdits moyens d'établissement (5, 8, 10) sélectionnent un mode télécopie lorsqu'un poste demandé est un dispositif de télécopie, et une touche de demande de conversation (34) devant être enfoncée pendant un mode de communication par télécopie afin de transmettre un signal de données à ladite unité principale de façon à ce que lesdits moyens d'établissement (5, 8, 10) de ladite unité principale envoient une demande de conversation au poste demandé sans déconnecter une ligne téléphonique (4), une fois que la communication par télécopie est terminée.

2. Appareil de communication selon la revendication 1, dans lequel ladite unité principale (1) comprend une unité de communication par télécopie (6) et une unité de base de téléphone sans cordon (7), tandis que ladite unité éloignée comprend une unité formant combiné téléphonique sans cordon (3).

3. Appareil de communication selon la revendication 2, dans lequel lesdits moyens d'établissement comprennent un relais (5) pour relier sélectivement une ligne téléphonique (4) soit à ladite unité de communication par télécopie (6), soit à ladite unité de base téléphonique sans cordon (7).

4. Appareil de communication selon la revendication 1, dans lequel lesdits moyens de contrôle (29) comprennent une diode électroluminescente destinée à clignoter en fonction dudit signal de contrôle de fonctionnement détecté.
